# FASCICULE DE BREVET EUROPEEN

(11) **EP 0 983 186 B1**
(45) Date de publication et mention de la délivrance du brevet: **09.04.2003**
(21) Numéro de dépôt: 98925765.4
(22) Date de dépôt: 20.05.1998
(51) Int. Cl.: B62M 11/14

(54) **PEDALIER REDUCTEUR D'EFFORT POUR CYCLES**
FAHRRADPEDAL MIT KRAFTÜBERSETZUNGSGETRIEBE
BICYCLE CRANK GEAR FOR REDUCING EFFORT

(30) Priorité: 21.05.1997 FR 9706995
(43) Date de publication de la demande: 08.03.2000
(73) Titulaire: Martinot, Alain, 58300 Charrin (FR)
(72) Inventeur: Martinot, Alain, 58300 Charrin (FR)
(74) Mandataire: Martin, Didier
(86) Numéro de dépôt international: FR9801023
(87) Numéro de publication internationale: WO98052816

(56) Documents cités:
- DE-A- 3 823 740
- FR-A- 320 496
- FR-A- 595 778
- FR-E- 1 140
- GB-A- 419 998
- GB-A- 873 987

## Description

### DOMAINE TECHNIQUE

La présente invention se rapporte au domaine technique général des pédaliers pour cycles, et par exemple pour bicyclette, permettant de transmettre l'effort de pédalage à la roue motrice du cycle par l'intermédiaire d'une chaîne de bicyclette.

La présente invention se rapporte à un pédalier pour cycles, par exemple pour bicyclette, selon le preambule de la revendication 1. Un tel pédalier est décrit dans DE-A-3823740.

Au sens de l'invention, il conviendra d'entendre sous le terme « cycle », tout appareil, motorisé ou non, du type bicyclette quelque soit son utilisation spécifique, quelle soit sportive ou non. A ce titre la dénomination cycle recouvrera, au sens de l'invention, des bicyclettes classiques, de préférence non motorisées, de transport ou de loisirs, les bicyclettes de compétition sur route ou sur piste, les bicyclettes dites VTT, ou d'autres bicyclettes spécialement conçues dans un but particulier.

De manière classique, il est connu d'assurer le déplacement d'un cycle par l'effort de pédalage effectué par le cycliste qui appuie sur les pédales, chaque pédale étant associée à une manivelle. L'effort de pédalage est transmis à la roue motrice, en général la roue arrière de la bicyclette, par l'intermédiaire d'une chaîne et d'un pédalier.

Ce dernier est formé par l'ensemble du jeu de pédales et des manivelles associées, ainsi que par un plateau denté monté sur l'axe du pédalier reliant les deux manivelles à travers le cadre du cycle. La chaîne de transmission de l'effort engrène sur le plateau et le pignon de la roue motrice, en l'occurrence la roue arrière.

L'effort à fournir par le cycliste est variable selon le profil de la route, selon le développement qu'il utilise, et selon la vitesse souhaitée.

### TECHNIQUE ANTERIEURE

II a déjà été proposé de tenter de réduire l'effort à fournir tout en maintenant la même vitesse de déplacement. Ainsi on a déjà essayé de donner une forme ovalisée au plateau avant des bicyclettes afin d'amener,
au moins sur une portion de la rotation du plateau ovalisé, la chaîne au plus près de l'axe théorique du pédalier. En effet, les manivelles font office de bras de levier lors de l'effort de pédalage, l'effort transmis étant maximisé lorsque le point de traction de la chaîne passe sur le plateau au plus près de l'axe théorique du pédalier.

Le recours à un plateau ovalisé permet donc en théorie de réduire partiellement et de manière cyclique l'effort de pédalage lorsque le point de traction de la chaîne se rapproche de l'axe du pédalier. Cette solution présente néanmoins l'inconvénient de rendre l'effort de pédalage irrégulier, ce qui exclut pratiquement d'utiliser un tel montage pour des efforts soutenus sur de longues périodes. Par ailleurs, le recours à un plateau ovalisé se heurte généralement à la sensation et perception générale négative de la part des cyclistes utilisant ce type de plateau en raison précisément des variations d'efforts ressentis.

Par ailleurs, il est déjà connu, par exemple dans les documents FR-A-1140 ou DE-A-3823740, d'équiper le pédalier de certaines bicyclettes de boîtes de vitesses pour faciliter le changement de développement de la bicyclette. Ces dispositifs mettent en oeuvre, de manière classique, des trains épicycloïdaux dans des configurations dynamiques en vue précisément d'assurer une fonction de changement de développement, mais ne réduisent pas l'effort de pédalage à développement identique.

### EXPOSE DE L'INVENTION

L'objet de la présente invention se propose en conséquence de porter remède aux inconvénients des solutions antérieures connues à ce jour, et en particulier de proposer un nouveau pédalier permettant de réduire l'effort de pédalage appliqué sur les pédales tout en gardant un développement identique.

Un autre objet de l'invention vise à proposer un nouveau pédalier de conception simplifiée tout en étant robuste et particulièrement à même d'équilibrer les efforts dynamiques divers auxquels il est soumis.

Un autre objet de l'invention vise à proposer un nouveau pédalier de conception particulièrement adapté à un montage simple et rapide sur tout type de cycles.

Un autre objet de l'invention vise à proposer un nouveau pédalier d'encombrement réduit et de masse particulièrement allégée.

Les objets assignés à l'invention sont atteints à l'aide d'un pédalier pour cycles selon la revendication 1.

Les objets assignés à l'invention sont également atteints à l'aide d'un cycle, telle qu'une bicyclette, équipée d'un pédalier conforme à l'invention.

### DESCRIPTION SOMMAIRE DES DESSINS

D'autre détails et avantages de l'invention seront décrits de manière détaillée à la lumière de la description et des exemples illustratifs qui suivent ci-après, donnés uniquement à titre d'exemples non limitatifs, dans lesquels :
- la figure 1 montre selon une vue en coupe transversale longitudinale, une première variante de réalisation d'un pédalier réducteur d'effort conforme à l'invention.
- la figure 2 montre selon une coupe transversale longitudinale, une seconde variante de réalisation d'un pédalier réducteur d'effort conforme à l'invention.
- la figure 3 montre selon une vue de face, une vue simplifiée des organes d'entraînement du pédalier réducteur d'effort conforme à l'invention.
- la figure 4 montre selon une coupe transversale longitudinale, une troisième variante de réalisation conforme à l'invention.

### MEILLEURE MANIERE DE REALISER L'INVENTION

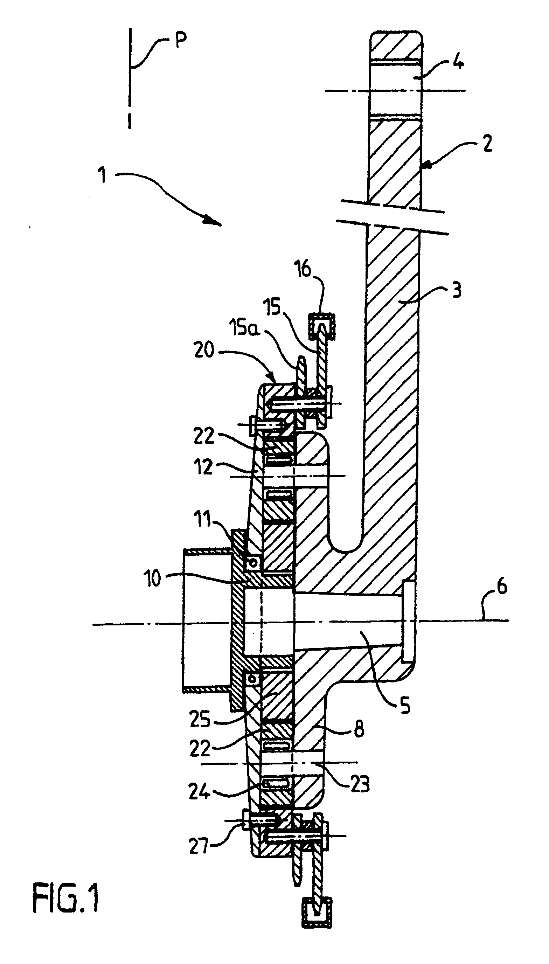

La figure 1 montre une première variante de réalisation d'un pédalier 1 conforme à l'invention et comprenant une manivelle comportant un bras 3 pourvue à une extrémité d'un orifice traversant 4 destiné à supporter l'axe d'une pédale (non représentée à la figure). L'autre extrémité du bras 3 est pourvue d'un second orifice traversant 5, destiné à supporter, par insertion, l'axe 6 du pédalier. Le bras 2 se termine à l'extrémité opposée à l'orifice traversant 4, par une pièce de forme sensiblement circulaire, partie intégrante du bras 2 formant un col 8 centré ou coaxial à l'axe du pédalier 6.

Le pédalier 1 conforme à l'invention est destiné à équiper tous les types de bicyclettes connues à ce jour comportant un cadre, au moins deux roues, un guidon, une selle, un système de freinage et un système d'entraînement, etc. La structure et le montage de ces équipements divers pour cycles étant bien connus de l'homme du métier, ces éléments ne seront pas décrits plus en détail et ne font pas partie de l'invention.

Le pédalier 1, comporte de manière classique un jeu de deux manivelles et de deux pédales associées, la figure 1 ne représentant qu'un seul bras de manivelle 2, étant entendu que le pédalier comporte un jeu complet de deux manivelles 2 et de deux pédales (non représentées aux figures). montées de manière symétrique par rapport au plan de symétrie vertical P du cycle, mais décalées angulairement de 180° en position fixe sur l'axe 6 du pédalier.

Le pédalier 1 conforme à l'invention comporte également une cuvette de pédalier 10, rallongée et montée sur l'axe 6 de pédalier, ladite cuvette 10 supportant un roulement à billes 11 supportant lui-même un flasque 12, par exemple cylindrique. Le flasque 12, réalisé en matériau plastique ou métallique, est monté centré et coaxial sur l'axe 6 du pédalier.

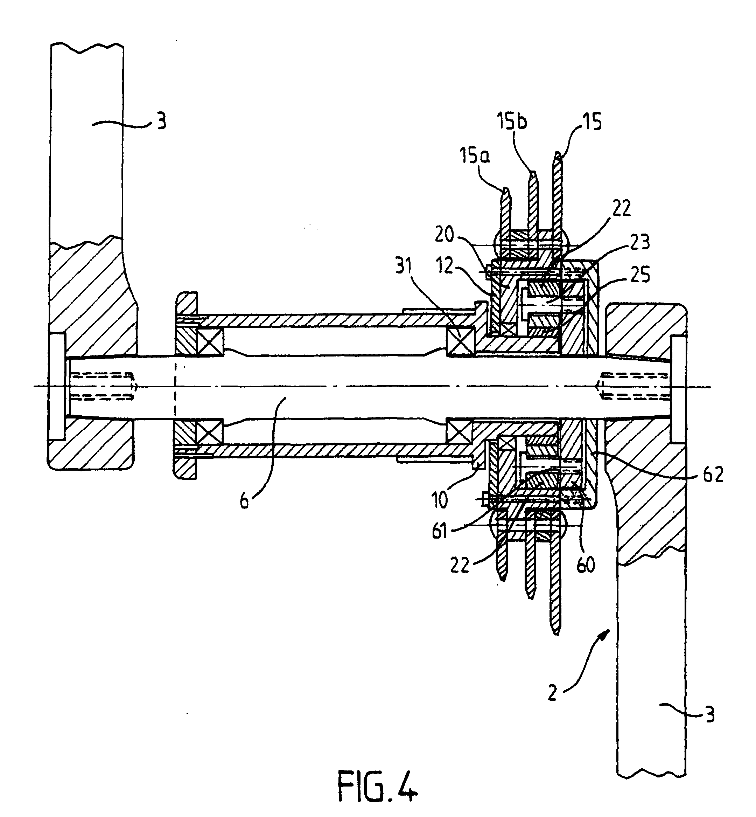

Le jeu de manivelles 2 et pédales, est susceptible d'entraîner en rotation autour de l'axe 6 du pédalier au moins un plateau 15, et de préférence plusieurs, et par exemple deux ou trois, destinés à supporter une chaîne d'entraînement 16 passant sur un pignon arrière (non représenté aux figures), associé à la roue arrière motrice de la bicyclette. Dans l'exemple de réalisation montré à la figure 1, le pédalier 1 comporte deux plateaux, à savoir un grand plateau 15, et un petit plateau 15a, situé vers la partie inteme de la bicyclette. Dans l'exemple de réalisation illustré à la figure 4, le pédalier 1 comporte trois plateaux notés 15, 15a, 15b. Le montage présenté est tel que l'ensemble des plateaux 15, 15a est disposé de manière sensiblement aligné avec le col 8 en considérant un plan d'alignement vertical sensiblement parallèle au plan de symétrie P de la bicyclette.

Les plateaux 15, 15a, se présentent de manière classique sous la forme de disques dentés, montés solidaires du pédalier 1, par l'intermédiaire de moyens de support 20, sur lesquels ils sont fixés par tous moyens appropriés.

Le pédalier 1 conforme à l'invention comporte également des organes d'entraînement en rotation 22 du ou des plateaux 15, 15a, lesdits organes 22 étant associés directement à la rotation de l'axe 6 en étant par exemple solidaires directement ou indirectement du bras 3 de la manivelle 2 de manière à être entrainés en rotation autour de l'axe 6 à la même vitesse que la manivelle 2. Les organes d'entraînement en rotation 22 sont avantageusement interposés entre, d'une part une pièce fixe 25 liée au pédalier 1 prés de son axe 6, et avantageusement centrée sur ce dernier et montée autour de la cuvette 10, et d'autre part les moyens de support 20 du ou des plateaux 15, 15a montés libres en rotation autour de l'axe 6 du pédalier.

Avantageusement, les organes d'entraînement 22 sont formés par une série de satellites 22, montés libres en rotation autour de l'axe 6 du pédalier et autour de leur propre axe 23 de rotation/symétrie à une extrémité de la manivelle 2 et disposés concentriquement et coaxialement autour de l'axe 6 du pédalier. Le pédalier 1 comporte au moins deux satellites 22, et de préférence trois ou cinq, répartis angulairement de manière régulière autour de l'axe 6 du pédalier.

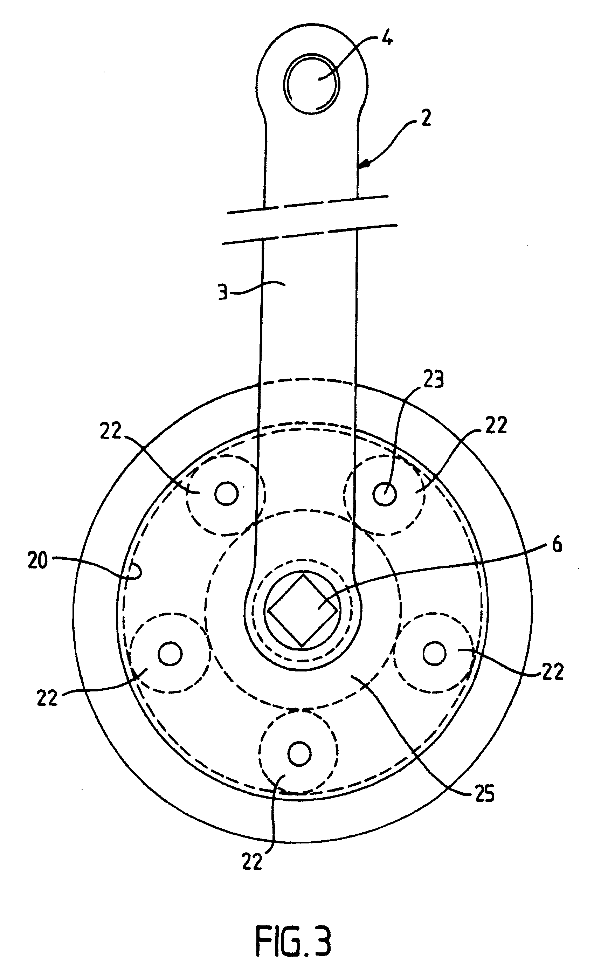

Dans l'exemple montré à la figure 1, les satellites 22 sont montés solidaires de la manivelle 2 sur le col 8 sur lequel ils sont fixés par l'intermédiaire d'un axe 23 et d'un roulement 24, les satellites 22 étant ainsi montés libres en rotation sur la face interne du col 8 et à sa périphérie externe (figure 3) et susceptibles de se déplacer autour de l'axe 6 du pédalier et autour de l'axe 23.

Le pédalier 1 conforme à l'invention comporte également en tant que pièce fixe 25 calée angulairement, un pignon planétaire monté coaxial à l'axe 6 du pédalier, par exemple sur la cuvette 10 de manière à engrener par sa surface périphérique externe avec les pignons extérieurs des satellites 22. Le pignon planétaire est fixé sur l'axe 6 et par exemple monté par vissage, clavetage ou par tout moyen approprié et équivalent pour obliger les satellites 22 à pivoter sur eux-mêmes et donner ainsi une vitesse angulaire supérieure à celle du moyen de support 20.

Selon l'invention, les moyens de support 20 du ou des plateaux 15, 15a, sont formés par une couronne crantée montée concentrique à l'axe 6 du pédalier autour de la surface périphérique des satellites 22 de manière à pouvoir engrener par sa denture périphérique interne sur les pignons formant la périphérie externe des satellites 22.

Le montage réalisé permet ainsi aux satellites 22 d'être interposés entre le pignon planétaire fixe 25 et la couronne crantée 20 de manière à faire
office d'organes d'entraînement moteurs entraînant en rotation le ou les plateaux 15, 15a à une vitesse de rotation supérieure à celle de la ou des manivelles 2.

Avantageusement, selon la variante de réalisation montrée à la figure 1, les plateaux 15, 15a sont montés solidaires de la couronne crantée 20 par exemple par vissage sur sa face périphérique externe située en regard du bras 3 de la manivelle 2. Selon une variante de montage particulièrement intéressante, la couronne crantée 20 est maintenue en place dans le pédalier 1, par l'intermédiaire du flasque 12 sur lequel elle est fixée par tous moyens appropriés, et par exemple par vissage à l'aide de vis 27. Selon ce montage, le flasque 12 fait office de plaque de maintien du côté opposé à la manivelle 2 relativement à l'ensemble formé par le pignon planétaire 25, les satellites 22 et la couronne crantée 20, en maintenant et plaquant les différentes pièces de l'ensemble contre la face inteme du col 8.

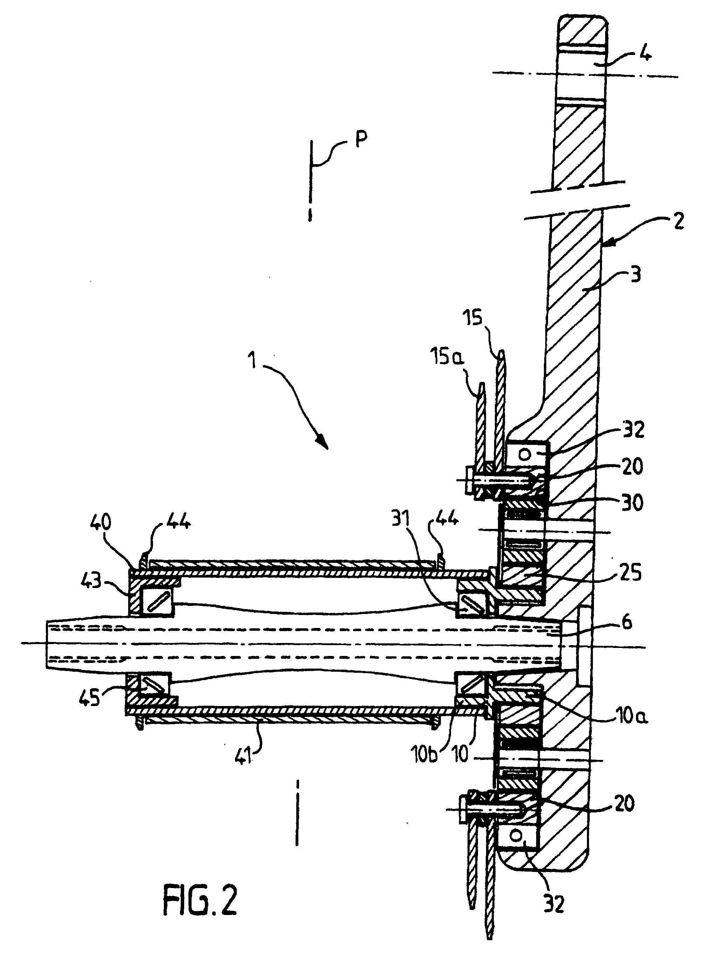

La variante de réalisation montrée à la figure 2 ne diffère de celle montrée à la figure 1 que par la disposition de certaines pièces du pédalier destinée à diminuer son encombrement et à améliorer sa facilité de montage.

Ainsi, le pédalier 1 conforme à l'invention et montré à la figure 2 comporte une manivelle 2 (l'autre manivelle n'étant pas représentée à la figure) avec un bras 3 pourvu, à l'extrémité opposée au pédalier 1, d'un orifice traversant 4 destiné à supporter une pédale (non montré à la figure). L'autre extrémité est pourvue d'un logement 30, en forme de couronne coaxiale à l'axe 6 du pédalier, le logement 30 étant ménagé dans le col 8. Le logement 30 est destiné à incorporer l'ensemble des pièces mobiles et fixes du pédalier 1 composées par le pignon planétaire fixe 25, les satellites 22 et la couronne crantée 25 ainsi que les roulements.

A cette fin la cuvette 10 comporte à l'extrémité opposée au plan P, une couronne 10a insérée au fond du logement 30 pour servir de support de fixation au pignon planétaire 25 solidaire de la couronne 10a par exemple par vissage. L'autre extrémité 10b de la cuvette 10, disposée vers le plan de symétrie P, est montée sur l'axe 6 du pédalier avec interposition d'un roulement 31, conique par exemple.

Selon cette seconde variante de réalisation, la couronne crantée 20 est montée mobile relativement à la manivelle 3 par l'intermédiaire de roulements 32, interposés entre la surface périphérique externe de la couronne crantée 20 et la face radiale externe du logement 30.

Selon cette variante le ou les plateaux 15, 15a sont montés solidaires, par exemple par vissage, sur la face interne de la couronne crantée 20, correspondant à la face de la couronne dirigée vers le plan de symétrie P de la bicyclette.

Avantageusement, cette seconde variante de réalisation comporte un boîtier 40, formant le boîtier du pédalier et se présentant sous la forme d'une pièce sensiblement cylindrique, destinée à être insérée puis vissée dans le cadre 41 de la bicyclette. A cette fin, il comporte, à l'extrémité opposée à celle portant le pédalier 1, une bague de réglage 43, associée à une paire d'écrous de réglage et blocage 44 supportés par le boîtier 40. L'autre extémité du boîtier 40 est solidaire, par exemple par vissage, de l'extrémité 10b de la cuvette 10, formant ainsi un ensemble monobloc.

Avantageusement, un roulement 45, de type conique, est interposé entre la bague de réglage 43 et l'axe 6 du pédalier.

Grâce à ce montage, il s'avère particulièrement aisé et rapide de monter le pédalier conforme à l'invention sur toute bicyclette classique. Il suffit en effet d'insérer dans le cadre 41, le boîtier 40 qui est solidaire du bras 3 intégrant l'ensemble réducteur d'effort constitué par le pédalier à train épicycloïdal décrit précédemment et qui forme un ensemble monobloc.

Cette variante de réalisation s'avère par ailleurs parfaitement équilibrée sur le plan dynamique, l'ensemble des pièces étant maintenu en rotation de manière parfaitement concentrique autour de l'axe 6 du pédalier.

De manière générale, le pédalier conforme à l'invention permet au bras 3 de la manivelle 2 d'entraîner en rotation les satellites 23 qui tournent et engrènent à la fois sur le pignon fixe 25 et sur la couronne crantée 20. Lors de la rotation du bras 3, la couronne crantée 20 est entraînée en rotation par les satellites 22 selon un rapport de vitesse différent qui est plus élevé que la vitesse de rotation des manivelles 2.

Un tel montage permet de réduire l'effort de pédalage en comparaison avec les solutions classiques, dans lesquelles la chaîne est entraînée directement et à la même vitesse par la manivelle 2.

Le pédalier selon l'invention permet également d'assurer une réactivité plus grande de la bicyclette lors des phases de démarrage en raison de la vitesse supérieure relative du plateau 15, 15a. Cette particularité peut s'avérer particulièrement utile pendant des phases de montée en vitesse, lors de compétitions cyclistes par exemple, en particulier lors des sprints, le pédalier selon l'invention permettant de conserver le plus grand développement possible.

Le pédalier selon l'invention permet également d'améliorer globalement l'effort de pédalage, en particulier l'effort dynamique résultant de l'augmentation de la vitesse angulaire de rotation tout en permettant de rapprocher, comparativement à des solutions classiques, le point de traction de la chaîne de l'axe 6 du pédalier et en conservant le même développement.

Enfin, le pédalier selon l'invention permet de conserver un dimensionnement général faible du pédalier et une garde au sol réduite et ce pour un développement important, alors même que la tendance générale de conception des pédaliers conduit à augmenter la longueur des bras 3 pour bénéficier d'un bras de levier plus important.

Le rapport de rotation du pédalier selon l'invention est bien évidemment fonction de la combinaison choisie entre les caractéristiques dimensionnelles du pignon planétaire 5, des satellites 22 et de la couronne crantée 20.

A titre d'exemple non limitatif, en utilisant un pignon planétaire fixe d'un diamètre de 50 mm avec cinq satellites d'un diamètre de 20 mm et une couronne crantée d'un diamètre intérieur de 90 mm, le bras 3 de la manivelle 2 fait un tour pendant que chaque satellite 22 fait 2,5 tours. Pendant ce même tour de rotation du bras 3, la couronne crantée effectue 1,56 tours. Pour un développement identique, il est donc possible de réduire le diamètre de chaque plateau 15, 15a et de réduire par voie de conséquence l'encombrement général du pédalier et de rapprocher le point de traction de la chaîne de l'axe 6 du pédalier. Ainsi, alors qu'avec un type de pédalier classique, le point de traction de la chaîne serait à une distance de l'axe du pédalier de l'ordre de 109,15 mm, le montage selon l'invention permet de situer le point de traction à un distance de l'ordre de 70,75 mm.

La variante de réalisation illustrée à la figure 4 ne diffère des autres variantes que par un montage différent des satellites 22. Au lieu d'être associés directement à la rotation de l'axe 6 par l'intermédiaire de la manivelle 2 de laquelle ils sont solidaires, les satellites 22 peuvent être montés solidaires d'une pièce intermédiaire 60, de préférence un disque annulaire, calée angulairement, par exemple directement, sur l'axe 6. Les satellites 22 sont fixés sur la pièce intermédiaire 60, par exemple par vissage sur la face interne 61 de la pièce intermédiaire, de manière à engrener directement avec le pignon planétaire fixe 25. Avantageusement, l'ensemble réducteur d'effort de cette variante peut être monobloc et comporter extérieurement un bouchon protecteur 62 rapporté sur la pièce intermédiaire.

En plus de sa simplicité de montage résultant de l'aspect monobloc de l'ensemble, ce montage améliore l'étanchéité du pédalier, en particulier au niveau de l'axe 6.

### POSSIBILITE D'APPLICATION INDUSTRIELLE

L'invention trouve son application industrielle dans la fabrication de cycles, notamment de bicyclettes.

## Revendications

1. Pédalier pour cycles comportant un jeu de manivelles (2) et pédales susceptible d'entraîner en rotation au moins un plateau (15, 15a, 15b) destiné à supporter une chaîne d'entraînement (16), ledit plateau (15, 15a, 15b) étant monté centré sur l'axe (6) du pédalier, des organes d'entraînement (22) en rotation du plateau (15, 15a, 15b) associés directement à la rotation de l'axe (6), ledit pédalier comprenant un ensemble réducteur d'effort qui comprend une série de satellites (22) en tant qu'organes d'entraînement moteurs du plateau (15, 15a, 15b), lesdits satellites étant montés concentriquement et libres en rotation autour de l'axe (6) du pédalier et étant interposés entre :
- d'une part, un pignon planétaire (25) monté concentrique à l'axe (6),
- et d'autre part, une couronne crantée (20) supportant ledit plateau (15, 15a, 15b) et montée libre en rotation et concentrique à l'axe (6) autour de la surface périphérique des satellites (22) pour que les satellites engrènent à la fois sur le pignon planétaire (25) et sur la couronne crantée (20), les satellites entraînant en rotation le plateau (15, 15a, 15b) à une vitesse supérieure à celle des manivelles (2) **caractérisé en ce qu'**il comporte un boîtier (40) de pédalier, destiné à être monté sur le cadre du cycle, dans lequel est monté l'axe (6) du pédalier avec une série de roulements, le pignon planétaire (25) étant solidaire dudit boîtier (40), par rapport auquel il est monté fixe et calé angulairement.

2. Pédalier selon la revendication 1, **caractérisé en ce que** le pignon planétaire (25) est monté solidaire du boîtier (40) par l'intermédiaire d'une cuvette (10) solidaire du boîtier (40), sur laquelle le pignon planétaire (25) est calé angulairement et par exemple fixé par vissage ou clavetage.

3. Pédalier selon la revendication 1, **caractérisé en ce que** l'ensemble réducteur d'effort est monobloc, de façon à ce que le pédalier forme un ensemble monobloc.

4. Pédalier selon l'une des revendications 1 à 3, **caractérisé en ce qu'**il comporte une plaque de maintien (12), montée concentrique autour de l'axe (6) du pédalier, sur un roulement (11) qui est supporté par la cuvette (10), ladite plaque (12) étant montée du côté opposé à la manivelle (2) relativement à l'ensemble pignon planétaire-satellites-couronne crantée, et étant fixée sur la couronne crantée (20) pour maintenir l'ensemble en position contre la face interne d'un col (8) de manivelle (2).

5. Pédalier selon l'une des revendications 1 à 4, **caractérisé en ce que** les satellites (22) sont montés directement solidaires de la manivelle (3).

6. Pédalier selon l'une des revendications 1 à 5, **caractérisé en ce qu'**il comporte au moins deux satellites (22), et de préférence trois ou cinq, répartis angulairement de manière régulière autour de l'axe (6) du pédalier.

7. Pédalier selon l'une des revendications 1 à 6, **caractérisé en ce que** la manivelle (2) comporte à son extrémité opposée à la pédale, un logement (30), dans lequel est monté l'ensemble pignon planétaire-satellites-couronne crantée, des roulements (32) étant disposés à la périphérie de la couronne crantée (20), entre cette dernière et le logement (30).

8. Pédalier selon l'une des revendications 1 à 7 **caractérisé en ce que** les satellites (22) sont montés solidaires d'une pièce intermédiaire (60) calée angulairement sur l'axe (6).

9. Pédalier selon l'une des revendications 1 à 8, **caractérisé en ce que** le boîtier (40) est pourvu d'un système de réglage et de fixation du boîtier sur le cadre (41) du cycle.

10. Pédalier selon la revendication 9, **caractérisé en ce que** le système de réglage et de fixation comprend une bague de réglage (43) associée à un écrou de réglage et de blocage (44) monté à l'extrémité du boîtier opposée à la manivelle de manière à bloquer l'ensemble monobloc en position lorsqu'il est introduit dans le cadre (41) du cycle.

11. Cycle équipé d'un pédalier conforme à l'une des revendications 1 à 10.

## Claims

1. Drive for bicycles comprising a set of cranks (2) and pedals able to drive in rotation at least one wheel (15, 15a, 15b) intended to support a drive chain (16), the said wheel (15, 15a, 15b) being mounted centred on the axle (6) of the drive, members (22) for driving the wheel (15, 15a, 15b) in rotation associated directly with the rotation of the axle (6), the said drive comprising a force-reducing assembly which comprises a series of planets (22) as drive members driving the wheel (15, 15a, 15b), the said planets being mounted concentrically and being free to rotate about the axle (6) of the drive and being interposed between:
- on the one hand a sun gear (25) mounted concentric with the axle (6),
- and on the other hand a notched ring (20) supporting the said wheel (15, 15a, 15b) and mounted to be free in rotation and concentric with the axle (6) around the peripheral surface of the planets (22) so that the planets mesh both on the sun gear (25) and on the notched ring (20),
the planets driving the wheel (15, 15a, 15b) in rotation at a speed greater than that of the cranks (2), **characterised in that** it comprises a drive casing (40), intended to be cast on the frame of the bicycle, in which the axle (6) of the drive is mounted with a series of bearings, the sun gear (25) being fixed to the said casing (40), with respect to which it is mounted fixedly and fixed angularly.

2. Drive according to Claim 1, **characterised in that** the sun gear (25) is mounted fixed to the casing (40) by means of a cup (10) fixed to the casing (40), on which the sun gear (25) is fixed angularly and for example fixed by screwing or keying.

3. Drive according to Claim 1, **characterised in that** the force-reducing assembly is in a single piece, so that the drive forms a single-piece assembly.

4. Drive according to one of Claims 1 to 3, **characterised in that** it comprises a holding plate (12) mounted concentric about the axle (6) of the drive on a bearing (11) which is supported by the cup (10), the said plate (12) being mounted on the opposite side to the crank (2) relative to the assembly consisting of sun gear, planets and notched ring, and being fixed to the notched ring (20) in order to keep the assembly in position against the internal face of a neck (8) of the crank (2).

5. Drive according to one of Claims 1 to 4, **characterised in that** the planets (2) are mounted directly fixed to the crank (3).

6. Drive according to one of Claims 1 to 5, **characterised in that** it comprises at least two planets (22), and preferably three or five, angularly distributed in a regular manner about the axle (6) of the drive.

7. Drive according to one of Claims 1 to 6, **characterised in that** the crank (2) comprises, at its end opposite to the pedal, a housing (30) in which the assembly consisting of sun gear, planets and notched ring is mounted, bearings (32) being disposed at the periphery of the notched ring (20), between the latter and the housing (30).

8. Drive according to one of Claims 1 to 7, **characterised in that** the planets (22) are mounted fixed to an intermediate piece (60) angularly fixed to the axle (6).

9. Drive according to one of Claims 1 to 8, **characterised in that** the casing (40) is provided with a system for adjusting and fixing the casing on the bicycle frame (41).

10. Drive according to Claim 9, **characterised in that** the adjustment and fixing system comprises an adjustment ring (43) associated with an adjusting and locking nut (44) mounted at the end of the casing opposite the crank so as to lock the single-piece assembly in position when it is introduced into the bicycle frame (41).

11. Bicycle equipped with a drive according to one of Claims 1 to 10.

## Patentansprüche

1. Fahrradpedal mit einem Kurbelsatz (2) und Pedalen, die dazu bestimmt sind mindestens ein Ritzel (15, 15a, 15b) drehbar anzutreiben, das zur Halterung einer Antriebskette (16) bestimmt ist, wobei das Ritzel (15, 15a, 15b) zentriert montiert ist auf der Welle (6) des Pedals und, drehbare Antriebselemente (22) des Ritzels (15, 15a, 15b) direkt mit der Drehung der Welle (6) verbunden sind, wobei das Pedal ein Kraftübersetzungsgetriebe und eine Reihe von Satelliten (22) aufweist als motorische Antriebselemente des Ritzels (15, 15a, 15b), und die Satelliten konzentrisch und frei drehbar um die Welle (6) des Pedals montiert und
- zwischen einerseits einem konzentrisch zur Welle (6) montierten Planetenzahnrad (25),
- und andererseits einem profilierten Aufsatz (20), der die Ritzel (15, 15a, 15b) hält und frei drehbar und konzentrisch montiert ist zur Welle (6) um die äußere Oberfläche der Satelliten (22), so dass die Satelliten sowohl in das Planetenzahnrad (25) als auch in den profilierten Aufsatz (20) eingreifen,
angeordnet sind,
wobei die Satelliten die Ritzel (15, 15a, 15b) mit einer Geschwindigkeit drehbar antreiben, die höher ist als die der Kurbeln, **dadurch gekennzeichnet, daß** ein Pedalgehäuse (40) vorgesehen ist, das zur Montage auf den Fahrradrahmen vorgesehen ist, in dem die Welle (6) des Pedals mit einer Reihe von Rollen montiert ist,
wobei das Planetenzahnrad (25) verbunden ist mit dem Gehäuse (40), an dem es fest und im Winkel versetzt montiert ist.

2. Pedal gemäß Anspruch 1, **dadurch gekennzeichnet, daß** das Planetenzahnrad (25) mittels einer mit dem Gehäuse (40) einteiligen Kapsel (10) fest verbunden ist mit dem Gehäuse (40) auf dem das Planetenzahnrad (25) im Winkel versetzt und zum Beispiel durch Verschraubung oder Verklammerung befestigt ist.

3. Pedal gemäß Anspruch 1, **dadurch gekennzeichnet, daß** das Kraftübersetzungsgetriebe als Monoblock ausgebildet ist, so dass das Pedal eine Monoblockeinheit bildet.

4. Pedal gemäß einem der Ansprüche 1 bis 3, **dadurch gekennzeichnet, daß** eine Halteplatte (12) vorgesehen ist, die konzentrisch um die Welle (6) des Pedals montiert ist auf einem Lager (11), das getragen wird von der Kapsel (10), wobei die Platte (12) auf der von der Kurbel (2) abgewandten Seite relativ zur Einheit Planetenzahnrad-Satelliten-profilierter Aufsatz montiert ist und auf dem profilierten Aufsatz (20) befestigt ist, um die Einheit gegen die innere Fläche einer Schulter der Kurbel (2) in Position zu halten.

5. Pedal gemäß einem der Ansprüche 1 bis 4, **dadurch gekennzeichnet, dass** die Satelliten (22) direkt fest auf der Kurbel (3) montiert sind.

6. Pedal gemäß einem der Ansprüche 1 bis 5, **dadurch gekennzeichnet, dass** mindestens zwei Satelliten (22), und vorzugsweise drei oder fünf, vorgesehen sind, die gleichmäßig verteilt sind um die Welle (6) des Pedals.

7. Pedal gemäß einem der Ansprüche 1 bis 6, **dadurch gekennzeichnet, dass** die Kurbel (2) an ihrem dem Pedal gegenüber liegenden Ende eine Aufnahme (30) aufweist, in die die Einheit Planetenzahnrad-Satelliten-profilierter Aufsatz montiert ist, wobei die Lager (32) am Umfang des profilierten Aufsatz (20) montiert sind zwischen dem Letzteren und der Aufnahme (30).

8. Pedal gemäß einem der Ansprüche 1 bis 7, **dadurch gekennzeichnet, dass** die Satelliten (22) an einem zur Welle (6) im Winkel verdrehten Zwischenteil (60) fest montiert sind.

9. Pedal gemäß einem der Ansprüche 1 bis 8, **dadurch gekennzeichnet, dass** das Gehäuse (40) mit einem Regelund Befestigungssystem des Gehäuses (40) auf dem Rahmen (41) des Fahrrads versehen ist.

10. Pedal gemäß Anspruch 9, **dadurch gekennzeichnet, dass** das Regel- und Befestigungssystem einen Stellring (43) umfasst, der einer Stell- und Sperrschraube (44) zugeordnet ist, die an dem der Kurbel gegenüber liegenden Ende des Gehäuses montiert ist, um die Monoblockeinheit in Position zu halten, wenn sie in den Rahmen (41) des Fahrrads eingesetzt wird.

11. Fahrrad mit einem Pedal entsprechend einer der Ansprüche 1 bis 10.
